# EUROPEAN PATENT APPLICATION

(11) **EP 1 832 355 A1**
(43) Date of publication of application: **12.09.2007**
(21) Application number: 04807858.8
(22) Date of filing: 27.12.2004
(51) Int. Cl.: B09B 5/00, G11B 5/024, G11B 7/0055, G06F 12/14, B29B 17/02, C08J 11/00

(54) **METHOD FOR DISCARDING DATA RECORDING MEDIUM**

(71) Applicant: Orient Instrument Computer Co., Ltd, Osaka-shi, Osaka 536-0014 (JP)
(72) Inventor: ITO, Tomoaki, Orient Instrument Computer Co., Ltd., Osaka-shi, Osaka 5360014 (JP)
(74) Representative: Paul, Dieter-Alfred
(86) International application number: PCT/JP2004/019503
(87) International publication number: WO 2006/070434

(57) **Abstract**

A method for disposing of a data recording means that disposes of the medium efficiently with high security, achieving recycling, is presented.

The method includes the steps of putting at least one medium to be disposed of and selected from optical recording media 2a, 2b and magnetic recording media 2c to 2f, in which data is recorded, into a recovery box 95 and sealing the box 95 with a sealing means 97, delivering the sealed box 95 to an operation site 8, and destroying and erasing recorded data by means of an optical-data destroying device and a magnetic-data erasing device, with the recovery box 95 maintaining sealed status.

## Description

### BACKGROUND OF THE INVENTION

### TECHNICAL FIELD

The present invention relates to a method of disposing of data recording media such as optical data recording media, magnetic data recording media, and data recording paper efficiently with high security.

### BACKGROUND ART

Now a variety of data recording media for recording analogue or digital data are in use. For example, CDs (Compact Discs), DVDs (Digital Versatile Discs), etc. are used as optical data recording media (also called "optical recording media") for recording digital data. Magneto-optical recording disks (MOs: Magneto-Optical Discs) for recording data using both light and magnetism are also practically used. Digital video tapes, magnetic tapes for general-purpose computers, etc. are used as magnetic data recording media (also called "magnetic recording media") for recording digital data. Further, VHS (Video Home System) video tapes, 8 mm video tapes etc. are used as magnetic data recording media for recording analogue data.

CDs or DVDs are each intrinsically a read-only data recording medium that has been pressed using an original disk. However, CD-Rs (CD Recordables) or DVD-Rs (DVD-Recordables) in each of which data can be recorded only once by means of a recording device and CD-RWs (CD ReWritables) or DVD-RWs (DVD ReWritables) rewritable by means of a recording device have also been put to practical use.

In disposing of a CD, a DVD, a CD-R, or a DVD-R among the optical data recording media, recording data or the recording medium itself should be destroyed because data recorded therein cannot be erased. In a CD-RW, a DVD-RW, or an MO, even after operation for erasing recorded data is carried out, the data itself remains, only an index indicating position information of data being erased. Therefore, in disposing of a CD-RW, a DVD-RW, or an MO, meaningless data should be written over an original data so as to erase the original data, thus requiring a long time for erasing the data.

Data in a magnetic data recording medium cannot be erased only by physically and/or logically formatting the medium. Therefore, also in disposing of such magnetic data recording disk, meaningless data should be written over original data so as to erase the original data, requiring a long time for erasing the data.

### DISCLOSURE OF THE INVENTION

### PROBLEMS TO BE SOLVED BY THE INVENTION

Therefore, the inventor proposed, in a formerly filed application (PCT/JP2004/18465), a device for dealing with data recording media that applies at least one of a magnetic field and an electromagnetic wave to an optical or a magnetic recording medium so as to destroy or erase data recorded therein. By means of the device, destruction of an optical data or erasure of a magnetic data can be efficiently carried out in a short time, dispensing with the time for writing meaningless data over the original data.

However, an organization managing a lot of data with high level of secrecy, for example, a governmental or municipal office, the police, and a hospital, should dispose of disused data recording media in the organization itself. Therefore, even in the case that the device proposed in the application (PCT/JP2004/18465) is employed, a lot of labor and time may be required for disposing of a lot of data recording media. Thus a further innovation is desired.

Adding to such optical and magnetic recording media, a lot of data recording paper is used in offices. However, like the optical or the magnetic recording medium, disused data recording paper on which secret information is recorded cannot be disposed of maintaining its original form, and should be disposed of after shredded by a shredder, requiring labor in disposal. Thus a further innovation is desired.

On the other hand, in relation to disposal of such data recording media, recycling in which scraps are sorted according to materials and reused is recently proposed. However, the organization managing a lot of secret data bears too much labor for destroying or erasing data recorded in the data recording media to share further labor for sorting scraps according to materials, failing to perform a systematic recycling.

The present invention is proposed in view of the above-described situation and has an object to provide a method for disposing of a data recording medium so as to dispose of the medium efficiently with high security and so as to achieve recycling.

### SUMMARY OF THE INVENTION

One aspect of the present invention to achieve the above-described object is a method for disposing of a data recording means including at least one medium selected from an optical recording medium and a magnetic recording medium, including the steps of putting the data recording means into a box, sealing the box, delivering the sealed box to an operation site, and rendering data recorded in the data recording means unreadable at the operation site by means of a data-readout-forbidding apparatus with the box sealed.

In the present invention, an optical recording medium is a medium consisting of a disk having pits thereon with a variety of reflection levels in radiation of a beam such as a laser beam, including a CD (CD-R, CD-RW) and a DVD (DVD-R, DVD-RW). A magnetic recording medium is a medium in which data is recorded as a magnetic data, including a floppy disk (trademark, FD), a video tape and a general-purpose magnetic tape. An MO (magneto-optical disk) is a medium consisting of a disk on which a magnetic data is recorded with the disk's temperature raised by means of a laser beam, having both a structure belonging to an optical recording medium and a recording system belonging to a magnetic recording medium.

Herein, the optical and the magnetic recording media have different modes for recording data in the media. According to these modes, methods for rendering data recorded therein unreadable are different.

A CD or a DVD, belonging to an optical recording medium, is a medium consisting essentially of a circular disk made of plastics such as a polycarbonate with irregularities called "pits" thereon according to data, a metal layer (aluminum deposition layer), and a protecting layer. The metal layer is for reflecting a laser beam radiated toward the pits so that a reflected beam may be read out. Therefore, method for rendering data recorded therein unreadable is a mechanical deformation of the pits and/or the aluminum deposition layer by means of, for example, heating.

On the other hand, method for rendering data recorded in a magnetic recording medium (including a FD, a video tape, and an MO) unreadable is an erasure or disturbance of recorded data by means of application of a magnetic field.

As a step of rendering data unreadable, destruction of an optical data and erasure of a magnetic data may be performed according to need. Only destruction of an optical data by an optical-data destroying device is sufficient if the data recording means consists only of an optical recording medium, whereas only erasure of a magnetic data by a magnetic-data erasing device is sufficient if the data recording means consists only of a magnetic recording medium. However, performing the both operations (i.e., destruction of an optical data and erasure of a magnetic data) is more reliable than performing either one of these. In the case of performing the both operations, either operation may be performed first, or the both may be performed simultaneously.

A data-readout-forbidding apparatus comprises at least one of an optical-data destroying device and a magnetic-data erasing device. Though either of the devices may be sufficient in some case, an apparatus including the both devices is more preferable as the apparatus is capable of disposing of any recording medium. Therefore, it is more preferable that the optical-data destroying device and the magnetic-data erasing device are combined to form an integrated apparatus for disposing of the data recording means.

The inventor already proposed in the previous application (PCT/JP2004/18465) an integrated apparatus for disposing of a data recording means formed by combination of an optical-data destroying device and a magnetic-data erasing device. Therefore, by only subjecting a sealed recovery box to an apparatus for disposing of a data recording means as disclosed in the application (PCT/JP2004/18465), destruction of the optical data and erasure of the magnetic data are performed sequentially or in parallel, thus improving efficiency of work.

In short, efficient destruction and erasure of data recorded in the data recording means are performed and efficiency of disposal is improved.

A term "with the box sealed" includes statuses in which a tape (a seal-determining sheet) is attached onto the box for determining breakage of the seal, in which the box is locked up, and in which the box is merely closed.

Subjection of a sealed recovery box to an optical-data destroying device involves heating and deformation of pits and/or an aluminum deposition layer of a CD or a DVD by means of a microwave radiated from the optical-data destruction device, while subjection of a sealed recovery box to a magnetic-data erasing device involves erasure or disturbance of magnetic data recorded on an FD or a video tape by application of a magnetic field generated by the magnetic-data erasing device.

Subjection of a sealed recovery box to an optical-data destroying device and/or a magnetic data erasing device destroys and/or erases all data recorded in the data recording means contained in the recovery box, without opening the box. Thus destruction and erasure of data is performed certainly before breakage of seal of the recovery box, avoiding leakage of data recorded in the data recording means. In the case of subjecting recovery boxes to the optical-data destroying device and/or the magnetic data erasing device, a status of each box (i.e., before or after operation) is distinguished by a stamp such as "operation completed".

Another aspect of the present invention is a method for disposing of a data recording means comprising both an optical recording medium and a magnetic recording medium, comprising the steps of putting the data recording means into a box, sealing the box, delivering the sealed box to an operation site, destroying data recorded in the optical recording medium at the operation site by means of an optical-data destroying device with the box sealed, and erasing data recorded in the magnetic recording medium by means of a magnetic-data erasing device simultaneously with the step of destroying data recorded in the optical recording medium.

Simultaneous performance of operations of destruction of an optical data and erasure of a magnetic data renders unreadable both an optical recording medium and a magnetic recording medium swiftly.

In the case of erasing magnetic data in the present invention, erasure of magnetic data is preferably performed with an indicator positioned in the vicinity of the box, the indicator having a displaying portion that changes its displaying status on exposure to a magnetic field having an intensity (i.e., strength) equal to or exceeding a predetermined intensity.

Change of the displaying status of the indicator may be one, or a combination of some, selected from the following:
(1) A predetermined letter, figure, mark, pattern, and/or color is displayed on the indicator in advance and disappears on exposure to a magnetic field having a predetermined intensity or more.
(2) At least one selected from particular letter, figure, mark, pattern, and color appears on exposure to a magnetic field having a predetermined intensity or more.
(3) A predetermined letter, figure, mark, pattern, and/or color is displayed on the indicator in advance and changes its appearance on exposure to a magnetic field having a predetermined intensity or more.

Preferably the displaying portion of the indicator has a magnetic body layer and a magnetic-particle layer in which magnetic particles are disposed to be freely movable so that distribution of the particles may be observed from outside. An appearance of the indicator may be, for example, a card. The display on the displaying portion should be designed so that the display should change in condition that it is located in a magnetic field having a predetermined intensity or more. The predetermined intensity should be determined according to the recording medium to undergo the operation.

The indicator changes the display on the displaying portion on exposure to a magnetic field, so as to show whether the recording medium has been exposed to a magnetic field having a predetermined intensity or more as long as the indicator is used with the recording medium. Therefore one performing the erasing operation can visually infer destruction of data, so that his or her anxiety is cleared.

In the present invention, the recovery box may be made of a material selected from various materials through which microwaves and magnetic field lines can pass. For example, a cardboard box or a wooden box may be used. The step of sealing the box may, for example, be performed by attaching a seal-determining sheet onto the box for determining breakage of the seal, by locking up the box, or by locking up the box and by attaching a seal-determining sheet onto the box for determining breakage of the seal.

Herein, "a seal-determining sheet" denotes a sealing sheet with a set of letters such as "NEVER BREAK THE SEAL" printed on its front surface and with starch applied onto its back surface. The seal-determining sheet is attachable to a cardboard box or a wooden box like an ordinary sealing sheet. However, once removed, the seal-determining sheet cannot be attached again and part of the starch is detached from the sheet and remains onto the box, the starch showing letters such as "SEAL BROKEN".

Use of a cardboard box and a seal-determining sheet as a recovery box and a sealing means clearly shows whether seal of the recovery box is broken. Such a configuration prevents unauthorized breakage of seal during delivery.

An embodiment in which a wooden box is used as a recovery box, the box is locked up by means of a lock, and the recovery box and a key for the lock are delivered separately to the operation site prevents unauthorized breakage of seal during delivery. Attachment of the seal-determining sheet onto the locked-up wooden box further ensures prevention of breakage of seal.

Such an embodiment facilitates confirmation of delivery of the recovery box with its seal unbroken from a source of delivery (delivery source) to the operation site. In other words, the operation site (the destination) can guarantee to the delivery source that the operation site has received the recovery box with its seal unbroken. Thus a delivery system in which the recovery box can be delivered between the delivery source and the destination with its seal unbroken is established, which enables entrusting the destination with disposal of data recording media in which data with high level of secrecy are recorded.

It is also possible to employ a simplified embodiment in which a cardboard box is used as a recovery box and a general-purpose binding tape is used as a means for sealing the box. Though such an embodiment makes it difficult to determine whether seal of the recovery box is broken, packaging of the box is facilitated so as to be suitable for disposing of data recording media in which data with relatively low level of secrecy are recorded.

The method for disposing of a data recording means preferably further includes the below-listed steps: (1) opening the sealed box, (2) separating the data recording means into fragments according to materials, (3) sorting the fragments according to materials, and (4) producing recycled raw materials by exerting an operation consisting of at least one of crushing, fusion and dissolution on at least part of the sorted fragments. The timing for opening the sealed box is (1) after both operations for destroying optical data and for erasing magnetic data if the both operations are performed or (2) after one of the operations if the one is performed.

By such an embodiment, optical recording media and/or magnetic recording media are disassembled and/or destroyed to be separated into fragments according to materials, i.e., plastics, metal and paper. The separated fragments are sorted according to materials. Therefore, the sorted plastics may be crushed into pellets so as to yield a recycled material. The sorted metal may be melted to form metal pellets so as to yield a recycled metal. The sorted paper may be dissolved and refined so as to yield a recycled paper. Thus data recording media can be recycled by separation and sorting according to materials, effectively utilizing limited resources.

In short, according to the embodiment, materials of discarded data recording media are recycled so as to efficiently utilize resources.

In the method for disposing of a data recording means, preferably the step of separating the optical recording medium includes heating a metal part of the optical recording medium by a metal-separating device adapted to radiate a microwave so as to separate the metal part from a plastic part.

As described above, a CD, a DVD, or an MO, which is an optical recording medium, includes a circular disk made of plastics such as a polycarbonate and a metal layer (aluminum deposition layer) for reflecting laser beam. Therefore, for separating the optical recording medium according to materials, the aluminum deposition layer should be separated from the disk made of plastics such as a polycarbonate.

The inventor has already proposed in a prior application (Japan Patent Application No. 2003-170145) a metal-separating device for separating metal from an optical recording medium. Therefore, by means of the present embodiment, by subjecting an optical recording medium to the metal-separating device disclosed in the prior application (Japan Patent Application No. 2003-170145), a microwave is radiated to the optical recording medium so that the aluminum deposition layer can be separated in a short time, thus improving efficiency of separation.

The present embodiment achieves easy separation of the recording medium to materials and improvement of efficiency of disposal.

In the method for disposing of a data recording means, the step of separating the optical recording medium may include scraping off a metal part of the optical recording medium by means of a scraper.

By the present embodiment, metal part of an optical recording medium can easily removed by scraping by means of a scraper. Thus the optical recording medium is easily separated to materials, without aid of the above-described metal-separating device. Metal powder formed by the scraping by means of the scraper may be collected to be a recycled material.

The present arrangement achieves easy separation of the recording medium to materials and improvement of efficiency of disposal.

A further aspect of the present invention is a method for disposing of a data recording means, the means including a data recording paper containing thereon information to be disposed of, including the steps of putting the data recording paper into a box, sealing the box, delivering the sealed box to an operation site, and dissolving at the operation site the box together with the data recording paper contained therein, with the box sealed.

Herein, "a data recording paper", included in a data recording means, includes all data recording paper such as a recording paper or a delivery label (or a delivery slip), written by hand or printed by means of a personal computer. "With the box sealed" in the present aspect includes not only attaching a tape (a seal-determining sheet) onto a closed recovery box for determining breakage of seal but also merely closing the box.

By the present aspect, a sealed recovery box is dissolved at the operation site with being sealed. Data on the data recording paper contained in the recovery box is prevented from leaking out by a dissolving operation performed after confirmation of maintenance of the seal of the recovery box, thus achieving an efficient disposal of data recording paper, ensuring security.

In the present aspect, preferably a cardboard box is used as the recovery box, in consideration of that the box is to be dissolved. The step of sealing the box may be performed by attaching a seal-determining sheet onto the box. This embodiment shows clearly whether seal of the recovery box is broken, thus preventing breakage of seal during delivery.

The present aspect facilitates confirmation of delivery of the recovery box from a delivery source to the operation site with its seal unbroken. In other words, the operation site (the destination) can guarantee to the delivery source that the operation site has received the recovery box with its seal unbroken. Thus disposal of data recording paper can be entrusted to the destination.

It is also possible to employ a simplified embodiment that uses a cardboard box as a recovery box and a general-purpose binding tape as a sealing means. Though such an embodiment makes it difficult to determine whether seal of the recovery box is broken, packaging of the box is facilitated so as to be suitable for disposing of data recording paper on which data with relatively low level of secrecy are recorded.

Preferably the method for disposing of a data recording means further includes a step of refining the dissolved data recording paper and the dissolved box so as to form a recycled material.

According to the present embodiment, data recording paper and the recovery box are dissolved and refined to form a recycled material, thus achieving an efficient reuse of resources. In other words, the present embodiment achieves recycling of discarded recording paper for efficient utilization of resources.

The method for disposing of a data recording means may further include steps of putting the sealed box into a lockable carrying case and locking up the carrying case, delivering (1) the carrying case containing the sealed box and (2) a key for releasing lock of the carrying case separately to an operation site, instead of delivering the sealed box itself to the operation site, and taking out the sealed box by releasing the lock of the carrying case by means of the key. Herein, the data recording means consists essentially of at least one selected from an optical recording medium, a magnetic recording medium, and data recording paper.

Though the formerly-described embodiment in which a cardboard box is used as a recovery box and a seal-determining sheet is attached as a sealing means easily determines breakage of seal during delivery and is effective for restraining unauthorized breakage of seal of the recovery box, it is difficult to prevent breakage of seal by the former embodiment. According to the present embodiment, the sealed recovery box is further put into a lockable carrying case, the carrying case is locked up, and the carrying case and its key are delivered separately, thus preventing unauthorized breakage of seal of the recovery box and efficiently avoiding leakage of a secret data during delivery.

Thus the present embodiment prevents unauthorized breakage of seal of the recovery box and achieves disposal avoiding leakage of data recorded in the recording means.

Preferably the method for disposing of a data recording means further includes a step of issuing a certificate showing completion of disposal of the data recording means from the operation site, to which the data recording means was delivered and at which the data recording means was disposed of, to a source of delivery.

The present arrangement allows the delivery source to ascertain, by receiving a disposal certificate, that the recovery box was delivered to the operation site, maintaining sealed status, and that the box was subjected to at least one of the destroying and erasing operations, maintaining sealed status. Thus certain disposal of data recording means is achieved, maintaining mutual confidence between the delivery source and the destination. In short, issuance of the disposal certificate enables disposal operation maintaining mutual confidence between the delivery source and the destination.

The steps of putting the data recording means into the box and sealing the box are preferably performed by a client who asked disposal of the data recording means, whereas the step of delivering the sealed box to the operation site is preferably performed by (1) the client, (2) one who is asked for the disposal by the client, or (3) one who is asked for the delivery by either of the former ones.

The present arrangement confirms the client, who asked the disposal, in the belief that no data leakage will be caused, because the client has put the data recording means into the box and has sealed the box by himself or herself.

### ADVANTAGEOUS EFFECT OF THE INVENTION

According to one aspect of the present invention, a method for disposing of a data recording means is presented, in which disposal of the medium is entrusted to and carried out by someone other than the client efficiently, avoiding leakage of data recorded on the medium. According to another aspect of the present invention, both optical and magnetic data recording media are swiftly rendered unreadable by performing simultaneously both destruction of optical data and erasure of magnetic data. According to still another aspect of the present invention, a method for disposing of a data recording means is proposed, in which disposal of data recording paper is entrusted to and carried out by someone other than the client efficiently, avoiding leakage of data recorded on the paper.

### BRIEF DESCRIPTION OF THE DRAWINGS

Fig. 1 is a schematic diagram showing procedures (a) to (e) for delivering a recovery box from a delivery source to a destination (i.e., an operation site) in a method for disposing of data recording media (data recording means) as an embodiment of the present invention;
Fig. 2A is a diagram showing a seal-determining sheet attached onto a surface of a recovery box;
Fig. 2B is a diagram showing the seal-determining sheet once attached being detached;
Fig. 3 is a schematic diagram showing procedures (a) to (d) to be performed in the operation site on a sealed recovery box delivered by the procedures shown in Fig. 1;
Fig. 4 is a schematic diagram showing procedures (a) to (g) to be performed in the operation site on data recording media in an opened recovery box after procedures shown in Fig. 3;
Fig. 5 relates to another embodiment of the present invention and is a schematic diagram showing procedures (a) to (c) for delivering a recovery box from a delivery source to a destination (an operation site) in a method for disposing of data recording media;
Fig. 6 is a schematic diagram showing procedures (a) and (b) to be performed in the operation site on a sealed recovery box delivered by the procedures shown in Fig. 5;
Fig. 7 is a basic circuit diagram of a data recording media disposal apparatus to be employed in a method of the present invention;
Fig. 8 is a graph showing intensity of a magnetic field to be generated in the disposal apparatus in Fig. 7;
Fig. 9 is an exploded perspective view showing a structure of the disposal apparatus in Fig. 7;
Fig. 10 is a schematic diagram of a metal-separating device for separating metal part of an optical data recording media and to be employed in the method of the present invention;
Fig. 11 is a perspective view showing an essential part of the metal-separating device in Fig. 10;
Fig. 12 is a perspective view of a disk retainer for retaining the optical data recording media and to be employed in the metal-separating device in Fig. 11;
Fig. 13 is a perspective view of an indicator for confirming data erasure embodying the present invention;
Fig. 14 is an exploded perspective view showing a stratified structure of the indicator shown in Fig. 13; and
Fig. 15 is a sectional view of a vicinity of the displaying portion of the indicator shown in Fig. 13.

### DESCRIPTION OF THE PREFERRED EMBODIMENTS

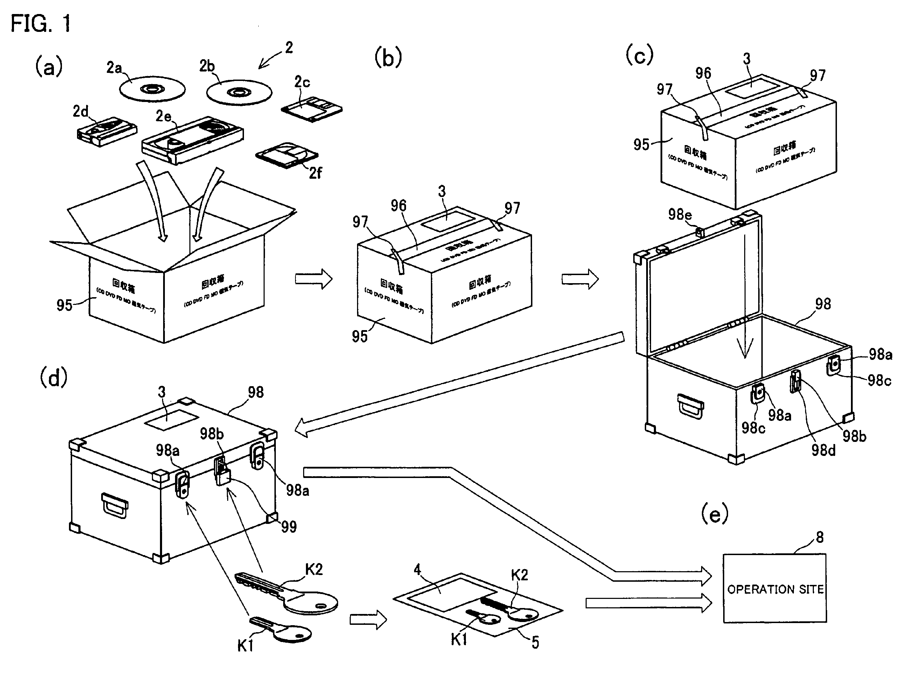

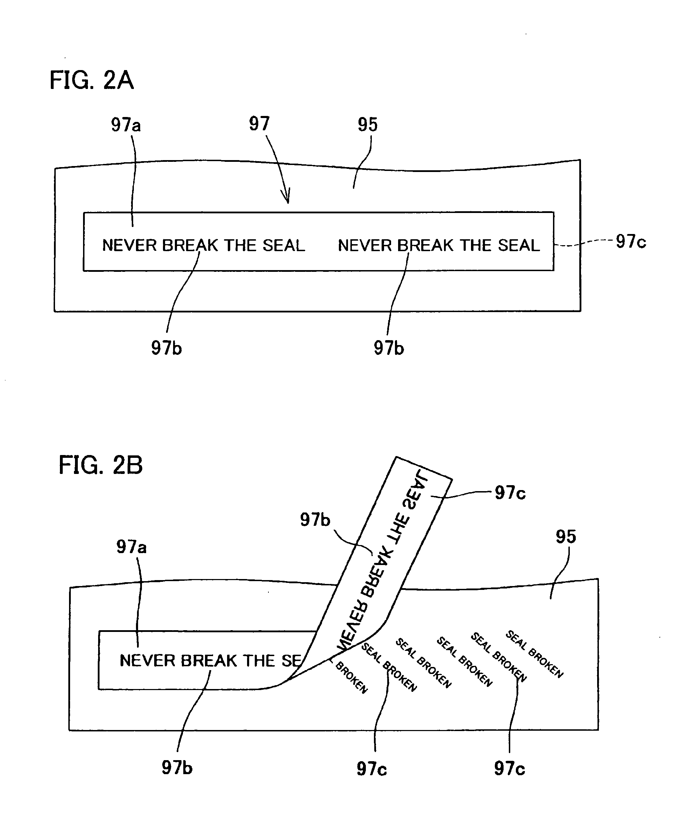

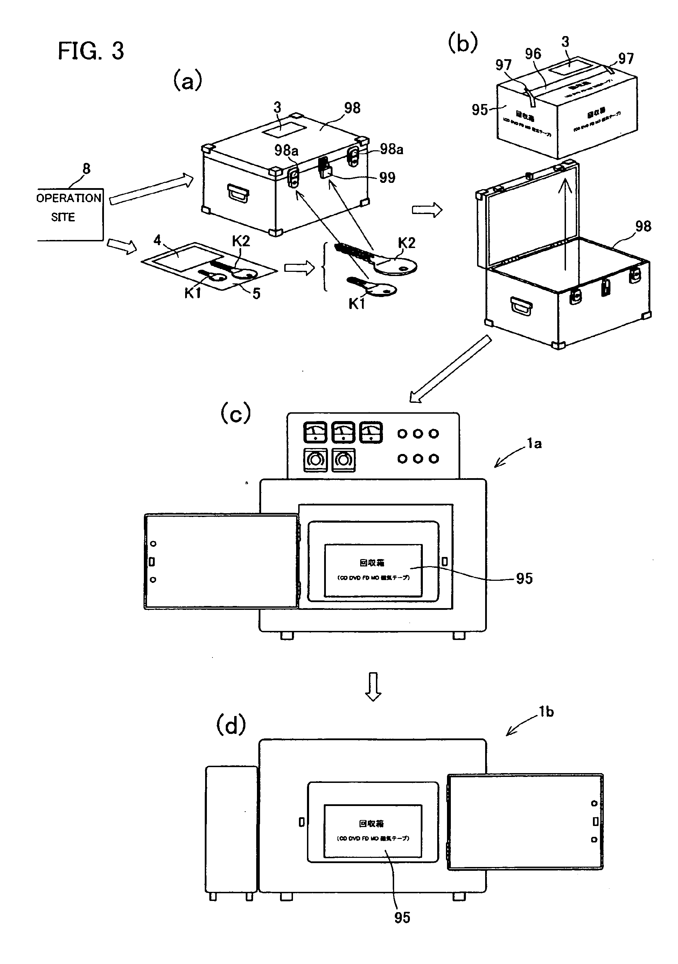

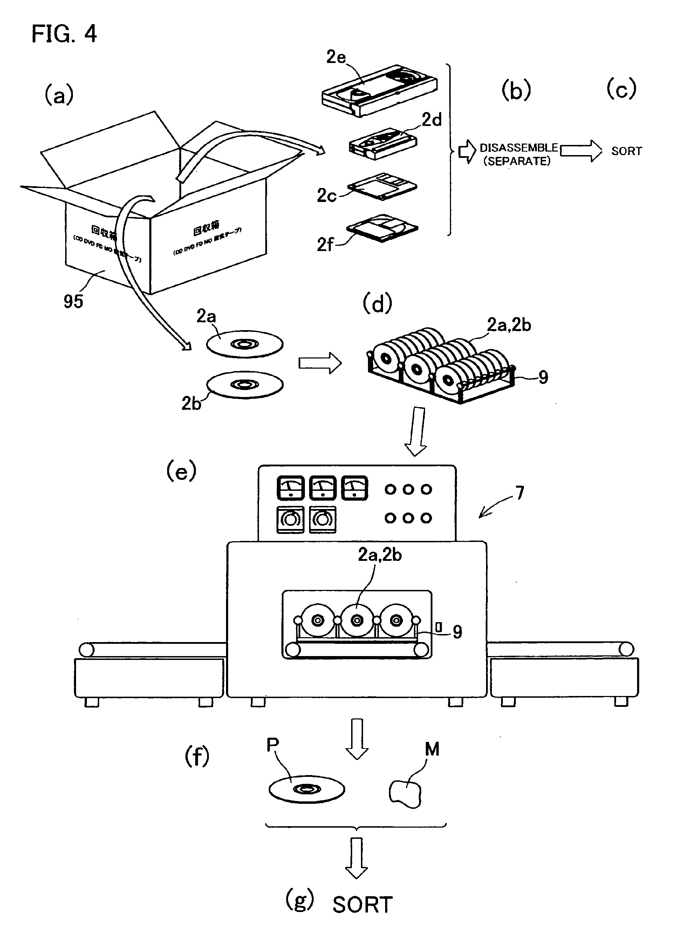

Now, preferred embodiments of the present invention will be described below, referring to the accompanying drawings. Figs. 1 to 4 are schematic diagrams showing a method for disposing of data recording media as an embodiment of the present invention, according to procedures. Fig. 1 is a diagram showing procedures for delivering a recovery box from a delivery source to a destination (an operation site), Figs. 2A and 2B are diagrams showing a seal-determining sheet, Fig. 3 is a diagram showing procedures to be performed on a sealed recovery box in the operation site, and Fig. 4 is a diagram showing procedures to be performed on data recording media in an opened recovery box in the operation site.

Processes of the disposal will be described in detail according to the drawings.

First, a client (i.e., a delivery source) who asks the disposal deposits data recording media 2 to be disposed of into a recovery box 95 one after another. The data recording media 2 includes optical data recording media (optical recording media) such as DVDs 2a and CDs 2b and/or magnetic data recording media (magnetic recording media) such as floppy disks 2c, 8 mm video tapes 2d, VHS video tapes 2e, and magneto-optical recording disks 2f. These are contained suitably in a recovery box 95. Each of the data recording media 2 may be put in the recovery box 95, enclosed in its outer casing, or without the casing.

The recovery box 95 is a cardboard box, with its bottom face sealed unopenably in advance by means of metal rivets. The recovery box 95 has letters meaning a "Recovery Box" and "CD, DVD, FD, MO, Magnetic Tape" on each of its faces excluding the bottom face. These are for showing clearly that the recovery box 95 is for containing data recording media 2 (2a to 2f) excluding data recording paper, which will be described later.

The recovery boxes 95 of the present invention have two sizes, i.e., large and small. A "large" recovery box has a length of 430 mm, a width of 300 mm, and a height of 280 mm, with a capacity of accommodating a maximum weight of 20 kg, approximately. The "large" recovery box can accommodate approximately 178 CDs with 12 cm diameter each housed in a 10 mm thick plastic casing. A "small" recovery box has a length of 260 mm, a width of 280 mm, and a height of 190 mm, with a capacity of accommodating a maximum weight of 10 kg, approximately.

After the data recording media 2 are put in the recovery box, lids of the recovery box 95 are closed and the box 95 is sealed by a packaging tape 96 attached lengthwise to a center of a top face of the box 95, as shown in Fig. 1(b).

Further, sealing sheets 97, 97 for determining breakage of seal (i.e., sealing means or seal-determining sheet) are attached to both ends in the length direction of the sealed box 95, each of the sheets crossing the tape 96 and extending from the top face to a side face of the box 95. By these procedures, the recovery box 95 is sealed, containing the data recording media 2 to be disposed of, as shown in Fig. 1(b). A delivery label (or delivery slip) 3 showing necessary items such as names and addresses of the destination and the delivery source is attached to the top face of the box 95, onto which the sealing sheets 97, 97 are already attached.

The sealing sheets consist each of a sealing member 97a with a set of letters such as "NEVER BREAK THE SEAL" printed on its front surface, as shown in Fig. 2A, and with silver-color starch 97c applied onto its back surface. The sealing sheets 97 can be attached onto a surface of the box 25 by pressing, like ordinary sealing sheets. However, if a sealing sheet once attached is removed, as shown in Fig. 2B, part of the starch 97c applied onto the back surface of the sealing material 97a remains, adhered, onto the box 95, the adhered starch 97c showing letters such as "SEAL BROKEN". A sealing sheet once removed cannot be attached onto the box 95 again by pressing.

Therefore, the attachment of the sealing sheet 97 onto the recovery box 95 as shown in Fig. 1(b) prevents opening of the box 95 without remaining trace thereon. In other words, attachment of the sealing sheet 97 enables an immediate determination on whether seal of the box 95 has been broken.

Then, as shown in Fig. 1(c), the sealed recovery box 95 is housed in a dedicated carrying case 98. The carrying case 98 is made of aluminum or duralumin in this embodiment and accommodates the whole recovery box 95 as it is. The case may be made of reinforced plastics, instead of metal.

The carrying case 98 has a "central locking portion" 98b and two "side locking portions" 98a, 98a arranged on both sides of the central locking portion 98b. The side locking portions 98a, 98a each has such a configuration that a lever 98c mounted to the side locking portion 98a is engaged with the lid on closure of the lid and the lever is prevented from releasing the engagement by means of locking with a first key K1. The central locking portion 98b has such a configuration that an engaging ring 98d is engaged with an engaging portion 98e on the lid and locked up by a cylinder lock 99 inserted in an opening formed in the engaging portion 98e.

As shown in Fig. 1(d), the recovery box 95 sealed by attachment of the sealing sheet 97 is contained in the carrying case 98, the locking portion 98a, 98a locked with the first key K1, and the locking portion 98b locked with a second key K2 for the cylinder lock 99. Then a copied delivery label 3 of the original delivery label attached to the box 95 as shown in Fig. 1(c) is attached onto a top face of the carrying case 98. Keys K1, K2 are contained in a key-carrying bag 5, to which a delivery label 4 showing necessary items such as names and addresses of the delivery source and the destination and the number of the carrying case 98 is attached.

Then the carrying case 98 and the key-carrying bag 5 are sent out to the operation site separately. By the procedures described above, the sending-out operation of the data recording media 2 at the delivery source (i.e., client) is finished.

On the other hand, as shown in Fig. 3(a), the destination (operation site) 8 receives the carrying case 98 and the key-carrying bag 5, which are delivered separately. The key-carrying bag 5 corresponding to the carrying case 98 is found out, referring to the delivery labels 3, 4 attached onto the case 98 and the bag 5. Then the locking portions 98a, 98b of the case 98 are released with the keys K1, K2 taken out from the bag 5. As shown in Fig. 3(b), the lid of the case 98 is opened so that the recovery box 95 contained therein is taken out, maintaining sealed status. The carrying case 98 will be sent back to the delivery source or reserved at the operation site 8, according to instructions from the delivery source.

Then, as shown in Fig. 3(c), the recovery box 95 taken out from the carrying case 98 is set to an optical-data destroying device 1a, maintaining sealed status. The optical-data destroying device 1a is operated to radiate a microwave into an interior of the sealed box 95 so as to destroy optical data recorded in the optical recording media (DVD 2a and CD 2b) contained in the box 95.

After the operation by the optical-data destroying device 1a is finished, the sealed recovery box 95 is taken out of the device 1a and stamped "OPTICAL DATA DESTROYED".

Then the recovery box 95 is set in a magnetic-data erasing device 1b as shown in Fig. 3(d), maintaining sealed status. The magnetic-data erasing device 1b is operated to apply an magnetic field into the interior of the sealed box 95 so as to erase magnetic data recorded in the magnetic recording media (FD 2c, video tape 2d, 2e, and MO 2f) contained in the box 95. After the operation by the magnetic-data erasing device 1b is finished, the sealed recovery box 95 is taken out of the device 1b and stamped "MAGNETIC DATA ERASED".

Through the procedures described above, data recorded in any data recording media 2 contained in the recovery box 95 is rendered unreadable as the data is destroyed or erased.

Then, as shown in Fig. 4(a), the recovery box 95 is opened and data recording media 2 contained therein are sorted. Among the sorted data recording media, FDs 2c, 8 mm video tapes 2d, VHS video tapes 2e, and MOs 2f are disassembled, separated and sorted into plastic, metal, and paper fragments, etc., as shown in Fig 4(b) and (c). The cases in which the data recording media 2 are enclosed are also separated into plastic and paper fragments, etc.

Among the separated materials, plastics are crushed to form pellets suitable for recycling, metals are melted and re-formed to form metal pellets suitable for recycling, and paper is dissolved and refined to be a recycling material.

As shown in Fig. 4(d), among the sorted data recording media 2, DVDs 2a and CDs 2b are held by a dedicated disk retainer 9. The disk retainer 9 with a number of DVDs 2a and CDs 2b is set to a metal-separating device 7, as shown in Fig. 4(e). Then the metal-separating device 7 is operated to radiate a microwave to the DVDs 2a and CDs 2b so as to melt metal layers on the DVDs 2a and CDs 2b so that the melted metal is separated from plastic members.

By this operation, the DVDs 2a and CDs 2b are separated into plastic material P (for example, polycarbonate) and melted metal material M, each material collected to be used as recycling material.

As described above, by the method of disposing of data recording media in the present embodiment, a recovery box 95 sealed at the delivery source is delivered to the operation site (i.e., destination), and a sealed status is maintained until data in the data recording media 2 contained in the box 95 is rendered completely unreadable. This enables a safe disposal of data recording media 2 containing data with high level of secrecy, preventing data leakage.

Data recording media 2 that have been subjected to operation for destroying or erasing data can be separated and sorted according to materials and processed to form a shape suitable for recycling, thus achieving systematic recycling operations, which cannot be achieved in organizations of the delivery sources.

In the present embodiment, the sealed recovery box 95 is delivered while being contained in the carrying case 98. However, the subject invention is not restricted by such a form of embodiment.

For example, the sealed recovery box 95 may be delivered without being contained in the case 98. By such a form of embodiment, complete protection of the box 95 from unauthorized seal breakage is not achieved, but the seal breakage is restrained by attachment of the sealing sheet 97, as breakage of seal is immediately determined.

Alternatively, the recovery box 95 may be delivered in a simplified form in which the box 95 is sealed with only a packaging tape 96. Such a form may be employed in delivering data recording media with low level of secrecy, though breakage of seal is difficult to be determined in the case.

Though a cardboard box is employed as a recovery box 95 in the present embodiment, a wooden box or a plastic case through which an electromagnetic wave or a magnetic field line can pass may be used as the recovery box. Such wooden box or plastic case may have a configuration in which the box or case is lockable so as to prevent unauthorized breakage of seal during delivery.

The operation site (destination) 8 may issue, to the delivery source, a disposal certificate showing completion of disposal operation upon completion of the disposal of the recovery box 95. The delivery source can be assured that disposal and recycling operations are carried out, avoiding data leakage, by the issuance of such a certificate.

In the above-mentioned embodiment, procedures for disposal of optical recording media 2a, 2b and/or magnetic recording media 2c to 2f are described. However, the subject invention is not limited to disposal of such data recording media 2, but may also be used in disposal of data recording paper (data recording media) 6 on which data are recorded.

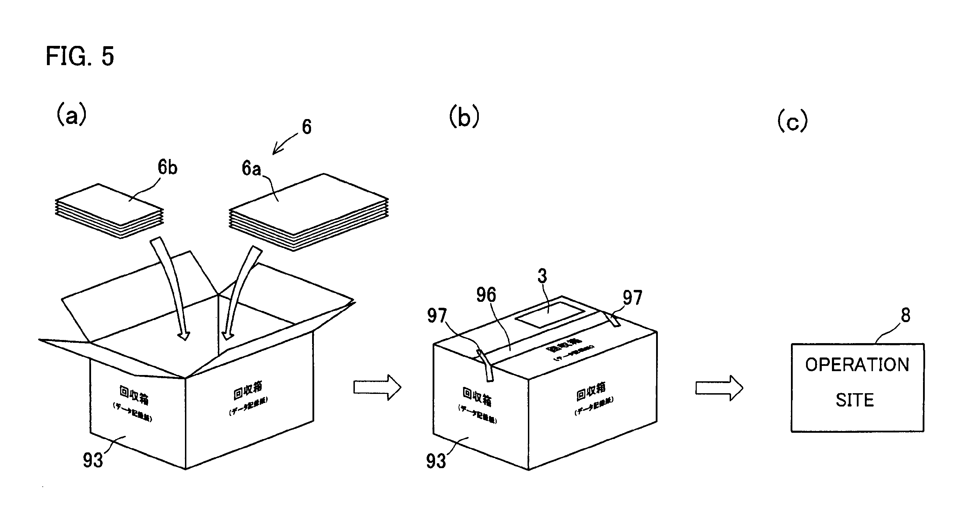

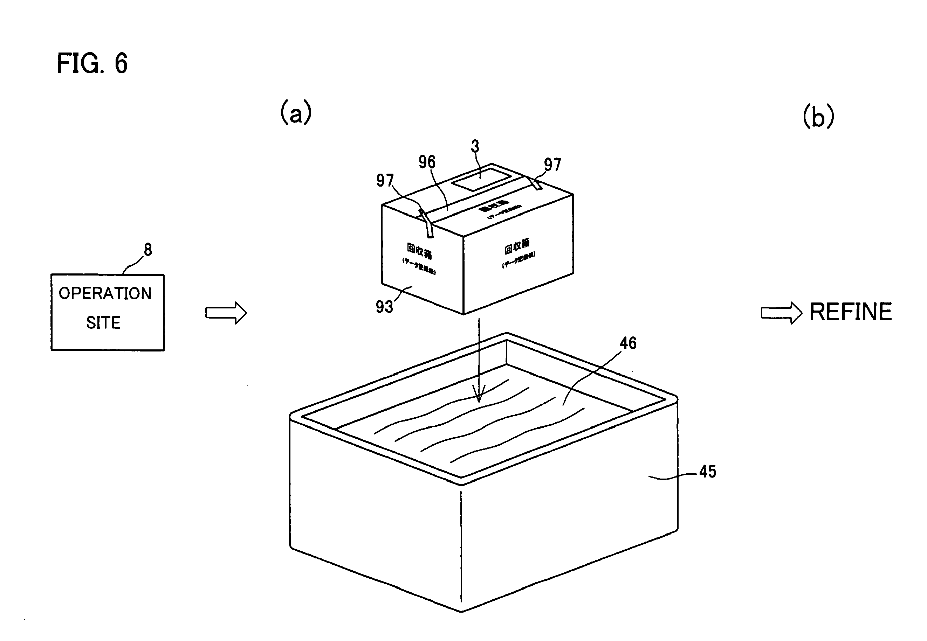

Procedures for disposing of data recording paper 6 are described below, referring to Figs. 5 and 6.

Fig. 5 is a schematic diagram showing procedures for delivering a recovery box from a delivery source to a destination (an operation site) and Fig. 6 is a diagram showing procedures to be performed on a sealed recovery box at the operation site.

At first, as shown in Fig. 5(a), a client who asks the disposal (i.e., the delivery source) pack the recovery box 93 with data recording paper 6a and delivery labels 6b to be disposed of.

The recovery box 93 is a cardboard box, with its bottom face sealed unopenably in advance by means of metal rivets. The recovery box 93 has letters meaning a "Recovery Box" and "Data Recording Paper" on each of its faces excluding the bottom face. These are for showing clearly that the recovery box 93 is not identical with the above-described recovery box 95 for containing data recording media 2 (2a to 2f), because the recovery box 93 is to be dissolved at the operation site, together with the paper 6a and labels 6b contained therein.

The recovery boxes 93 of the present embodiment have two sizes, i.e., large and small, similarly to the recovery boxes 95, as shown in Fig. 1, of the former embodiment. A "large" recovery box can accommodate at most 900 sheets of A4 size regular paper.

After data recording paper 6 to be discarded is packed into the recovery box 93, lids of the box 93 are closed and the box 93 is sealed by a packaging tape 96 attached lengthwise to a center of a top face of the box 93, as shown in Fig. 5(b).

Further, sealing sheets 97 for determining breakage of seal (i.e., sealing means) are attached to both ends in the length direction of the sealed box 93, each of the sheets crossing the tape 96 and extending from the top face to a side face of the box 93. By the procedures described above, the recovery box 93 is sealed, containing the data recording paper 6 to be discarded, as shown in Fig. 5(b).

A delivery label 3 showing necessary items such as names and addresses of the delivery source and destination is attached to the top face of the box 93, onto which the sealing sheets 97, 97 are already attached. Then, as shown in Fig. 5(c), the sealed recovery box 93 is forwarded to the operation site 8. By the procedures described above, forwarding operation of the data recording paper 6 at the delivery source (client) is completed.

At the destination (operation site) 8, as shown in Fig. 6(a), the recovery box 93 is immersed, maintaining sealed status, in a dissolving liquid 46 filled within a dissolution tank 45 so that the box 93 is dissolved together with the data recording paper 6 contained therein. Cellulose originated from dissolved data recording paper 6 etc. is refined so as to form recycled material, as shown in Fig. 6(b).

Before the box 93 is put into the tank 45, the delivery label attached to the box 93 is removed from the box 93 and reserved so as to record the fact that dissolution is performed.

As described above, by the method of the present embodiment for disposing of data recording media, the recovery box 93 sealed at the delivery source is delivered to the operation site 8 (i.e., the destination) and is dissolved, maintaining sealed status. This enables a safe disposal of data recording paper 6 containing data with high level of secrecy, preventing data leakage.

The dissolved data recording paper 6 is refined so as to be in a form suitable for recycling, thus enabling a systematic recycling, which utilizes resources.

In the present embodiment, the sealed recovery box 93 is delivered to the operation site 8 without being contained in a case. However, the sealed recovery box 93 may be delivered while being contained in the above-described lockable carrying case 98 (as shown in Fig. 1). By such a form of embodiment, protection of the box 93 from unauthorized seal breakage during delivery is achieved, thus enabling safe delivery and disposal of data recording paper 6 having high level of secrecy.

Also in the present embodiment, the operation site (destination) 8 may issue, to the delivery source, a disposal certificate showing completion of the disposal upon completion of the dissolution of the recovery box 93. The delivery source is assured, by the issuance of such a certificate, that disposal and recycling operations are carried out, avoiding data leakage.

Then specific forms of the above-described embodiments of an optical-data destroying device 1a, a magnetic-data erasing device 1b (as shown in Fig. 3(c) and (d)), and a metal-separating device 7 will be described below.

The optical-data destroying device 1a (as shown in Fig. 3(c)) and the magnetic-data erasing device 1b (as shown in Fig. 3(d)), being discrete devices in the former embodiment, are described hereinafter as an integrated data recording media disposal apparatus 1 having both functions of optical data destruction and magnetic data erasure.

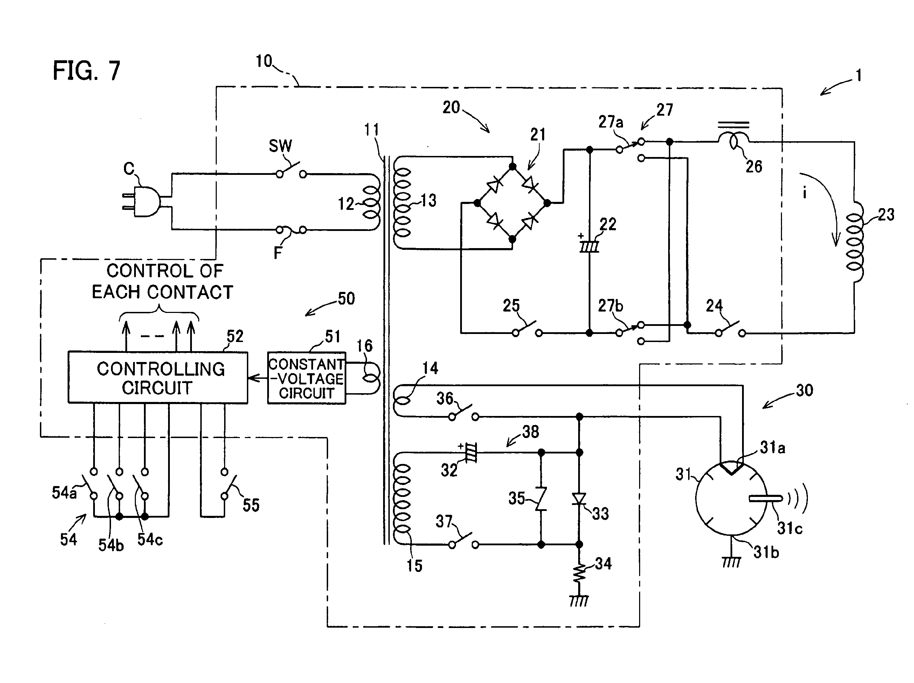

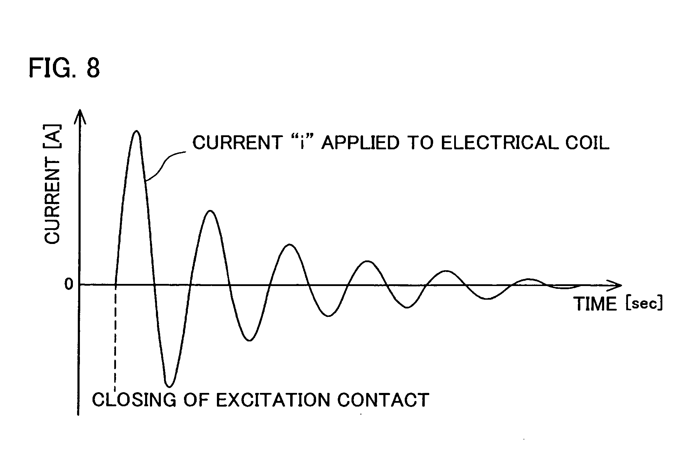

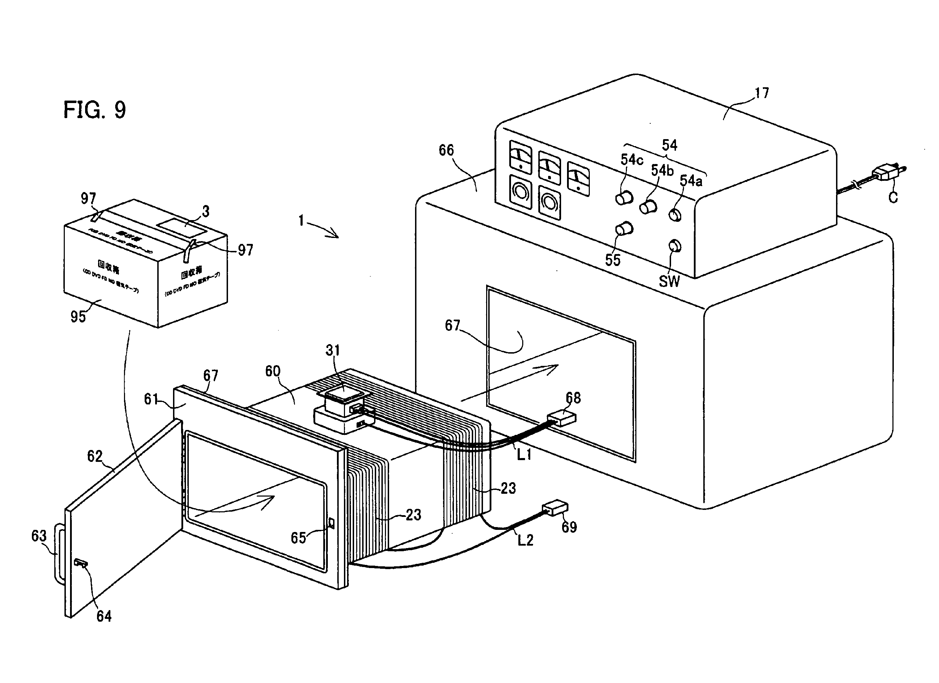

Fig. 7 is a basic circuit diagram of the data recording media disposal apparatus 1 to be employed in the present invention, Fig. 8 is a graph showing intensity of a magnetic field to be generated in the apparatus 1 in Fig. 7, and Fig. 9 is an exploded perspective view showing configuration of the disposal apparatus 1 in Fig. 7.

As shown in Fig. 7, the disposal apparatus 1 is generally made up of portions consisting of a magnetic field generator 20, an electromagnetic wave generator 30, a controller 50, and a transformer (power supply) 11 for supplying an AC power to the other portions.

As shown in Fig. 7, the transformer 11 is connected to a commercial power source (AC100V) and for generating AC voltages necessary for the other portions. The transformer 11 has a primary winding 12 connected to the power source (AC100V), a secondary winding 13 connected to the field generator 20, further secondary windings 14 and 15 connected to the electromagnetic wave generator 30, and a still further secondary winding 16 connected to the controller 50. The primary winding 12 of the transformer 11 is connected to a power plug C via a power switch SW and a fuse F.

The field generator 20 has a function of generating an attenuating alternating magnetic field by discharging electricity stored in a capacitor 22 through an electrical coil 23, as shown in Fig. 7. The field generator 20 has a bridge diode 21 connected to the secondary winding 13 so that a rectified output of the diode 21 is supplied to the capacitor 22 via a "charging contact" 25. Both ends of the capacitor 22 are connected, via a "polarity reverser" 27, to a circuit containing a reactor 26, the coil 23, and an "excitation contact" 24 in series.

A polarized electrolytic capacitor is used as the capacitor 22. The reactor 26 connected in series to the coil 23 has a function of stabilizing current applied to the coil 23. The polarity reverser 27, consisting of two contacts 27a and 27b switched in conjunction with each other, has a function of reversing direction of current flowing from the capacitor 22 to the coil 23 by switching the contacts 27a and 27b. Opening and closing of the contacts of the field generator 20, i.e., the discharging contact 25, the excitation contact 24, and the contacts 27a and 27b of the polarity reverser 27, are controlled by the controller 50 described below.

The field generator 20 generates an attenuating alternating magnetic field by operations described below. At first, with the excitation contact 24 opened, the charging contact 25 is closed so as to charge the capacitor 22 until a charged voltage of the capacitor 22 reaches the peak value of full-wave rectified voltage by the bridge diode 21. Time duration required for the charging is determined by the capacitance of the capacitor 22 and a winding resistance of the secondary winding 13 of the transformer 11.

After completion of charging of the capacitor 22, the charging contact 25 is opened. At this moment, the capacitor 22 is fully charged, with its terminal voltage substantially equal to the peak value of full-wave rectified voltage by the bridge diode 21. Then, closure of the excitation contact 24 makes a rapid discharge of the electricity charged in the capacitor 22 through the coil 23. Herein, the capacitor 22 and the coil 23 are connected in series so as to form a series resonant circuit. Therefore, with the excitation contact 24 closed, an attenuating alternating current "i" flows through the coil 23, lowering its wave height with duration of time, as shown in Fig. 8.

A cycle time of the attenuating alternating current "i" flowing through the coil 23 is generally determined by the capacitance of the capacitor 22 and an inductance of the coil 23, whereas its attenuation rate is determined by an internal resistance of the capacitor 22 and a resistance component of the coil 23. In other words, closure of the excitation contact 24 brings about the attenuating alternating current "i" through the coil 23, as shown in Fig. 8, having a cycle time and an attenuation rate determined by the series resonant circuit consisting essentially of the capacitor 22 and the coil 23. The current attenuates, turning its polarity, until its value reaches zero.

Thus closure of the excitation contact 24 generates, around the coil 23, the attenuating alternating magnetic field, in which magnetic flux density gradually decreases, reversing its poles, as time passes. The magnetic field generator 20 generates the attenuating alternating magnetic field based on the above-described principle and erases a magnetic data recorded on the magnetic recording medium by means of the generated attenuating alternating magnetic field. The magnetic field generator 20 of the disposal apparatus 1 is a circuit that does not generate a strong magnetic field for a long time but generates the attenuating alternating magnetic field whose magnetic flux density decreases as time passes.

The electromagnetic wave generator 30 has a function of generating an electromagnetic wave of a microwave band. The wave generator 30, as shown in Fig. 7, has a magnetron 31 whose cathode (heater) 31 a is connected to the secondary winding (heater winding) 14 of the transformer 11 via heater current-carrying contact 36. The secondary winding 15 of the transformer 11 is connected to a voltage doubler rectifier circuit 38 formed by a capacitor 32 and a diode 33. A positive output voltage of the voltage doubler rectifier circuit 38 is connected to an anode 31b of the magnetron 31 via a current-limit resistance 34, whereas a negative output voltage of the circuit 38 is connected to a cathode 31 a of the magnetron 31.

The present embodiment employs a grounded anode circuit in which the anode 31b of the magnetron 31 is grounded. A surge absorber 35 is connected in parallel with the diode 33 of the rectifier circuit 38 so as to absorb a surge voltage generated in the circuit, thus protecting the diode 33 from destruction. Opening and closing of both contacts in the wave generator 30, i.e., the heater current-carrying contact 36 and an anodal current-carrying contact 37, are controlled by the controller 50, which will be described below.

The electromagnetic wave generator 30 generates an electromagnetic wave through the following operations. First, the heater current-carrying contact 36 is closed so as to heat the cathode (heater) 31a of the magnetron 31. This enables the magnetron 31 to emit thermal electrons from the cathode 31a. Then, closure of the anodal current-carrying contact 37 applies a rectified output voltage of the rectifier circuit 38 to the anode 31b of the magnetron 31, so that the magnetron 31 initiates an oscillation so as to radiate an electromagnetic wave of a predetermined strength from its antenna 31 c. The present embodiment uses a magnetron 31 with an oscillating frequency of substantially 4.3 GHz, the electromagnetic wave radiated from the antenna 31 c being a microwave with a frequency of substantially 4.3 GHz and a wave length of substantially 7cm.

The wave generator 30 generates a microwave by such circuit configuration and has a function of destroying recorded data by applying the generated electromagnetic wave to optical recording media. The present embodiment uses the magnetron 31 having an oscillating frequency of substantially 4.3 GHz, but may use one having an oscillating frequency of substantially 2.45 GHz. By means of a magnetron 31 having one of such frequencies, optical data recorded on optical recording media are efficiently destroyed.

The controller 50, as shown in Fig. 7, includes a constant-voltage circuit 51 and a controlling circuit 52, and has a function of controlling opening and closing of each contact provided in the field generator 20 and the wave generator 30.

The constant-voltage circuit 51 is adapted to supply a stabilized DC voltage to the controlling circuit 52 upon receipt of an AC voltage of the secondary winding 16 of the transformer 11.

The controlling circuit 52 is a circuit adapted for a digital control and provided with a CPU. Either of an operating switch 55 and a mode setting section 54, which includes a magnetic field generating switch 54a, an electromagnetic wave generating switch 54b, and a magnetic field and electromagnetic wave generating switch 54c, is connected to the circuit 52.

Further, the controlling circuit 52 has a configuration capable of separately controlling opening and closing of a plurality of contacts according to a program manipulation, the contacts corresponding to the contacts of the field generator 20 and the wave generator 30 both described above.

The present embodiment uses mechanically-linked alternate push switches as the switches 54a to 54c of the mode setting section 54, and when one of the switches is pushed in so as to be closed, the other two switches project to be opened. Further, a momentary-type push switch is used as the operating switch 55.

The controlling circuit 52 has such a controlling function as performing program manipulations in response to a setting of the mode setting section 54 and an operation of the operating switch 55 and as generating a magnetic field and/or an electromagnetic wave by an opening and closing control of each of the contacts of the field generator 20 and the wave generator 30 described above.

The disposal apparatus 1 of the present embodiment has the field generator 20, the wave generator 30, and the controller 50 each having the above-mentioned function, and a circuit block 10 specified by a dashed line in Fig. 7 is integrally formed on a circuit board or the like.

Next, a structure of the disposal apparatus 1 of the present embodiment will be described, making reference to Fig. 9. The disposal apparatus 1 includes a container 60 and an outer casing 66 adapted to cover the container 60 from outside.

The container 60, as shown in Fig. 9, is a square-shaped box made of a non-magnetic material and having a cavity therewithin, its front face being opened, its left, right, top, bottom, and rear faces being closed. In the present embodiment, the container 60 is made of a copper (non-magnetic material) plate. The container 60 has the magnetron 31 secured to its central part of the top face. An antenna 31c (see Fig. 7) of the magnetron 31 protrudes into the inner cavity of the container 60. Wirings L1 for applying a heater voltage and an anode voltage are connected to the magnetron 31, the wirings L 1 having a connector 68 connected to a distal end thereof.

The container 60 has an outer wall around which the coil 23 is wound backward from its front in such a manner as sandwiching the magnetron 31 from both front and rear, both ends of the coil 23 being connected to a connector 69 via wirings L2. In the present embodiment, an enamel wire is used as the coil 23 and an insulating sheet (not shown) is interposed between the coil 23 and the outer periphery of the container 60.

The container 60 has a flange 61 made of a magnetic material at a periphery of the front face thereof and a door 62 mounted on the flange 62 so as to cover the front face of the container 60. Specifically, a left edge of the door 62 is pivoted to a left end portion of the flange 61, so as to be openable and closable.

In the present embodiment, iron (magnetic material) plates are used as both the flange 61 and the door 62. The door 62 has a handle 63 at a right end of a front face thereof, and a hook 64 protruding backward adjacent to the handle 63. The flange 61 also has an engagement hole 65 corresponding to the hook 64.

As just described, the container 60 is a box having an opening of the front face made of copper (non-magnetic material), at which opening the flange 61 made of iron (magnetic material) plate is provided, to which flange 61 the door 62 made of iron (magnetic material) plate is openably and closably mounted. An electromagnetic wave absorbing member 67 is attached to an entire rear face of the flange 61. The present embodiment uses as the absorbing member 67 a rubber electromagnetic wave absorbing member that is made by dispersing an iron material having electromagnetic wave absorbability in a synthetic rubber.

The outer casing 66 is a box made of a magnetic material larger than the container 60, part of its front face being opened, its left, right, top, bottom, and rear faces being closed, so as to have a shape capable of accommodating the container 60. Electromagnetic wave absorbing members 67, each similar to that attached to the flange 61, are attached to an entire inner surface of the casing 66. Specifically, the casing 66 is a box made of iron with the electromagnetic wave absorbing members 67 attached to the entire inner surface.

A circuit case 17 housing therein the circuit block 10 shown in Fig. 7 is mounted onto the casing 66. The circuit case 17 provides a power switch SW, the operating switch 55, and three switches 54a, 54b, and 54c of the mode setting section 54 and has an AC code with an AC power plug C pulled out of a rear face of the case 17.

In assembling the disposal apparatus 1, as shown in Fig. 9, the connector 68 connected to the magnetron 31 and the connector 69 connected to the coil 23 are connected to connectors (not shown) provided in the case 17 through openings (not shown) formed on the upper face of the casing 66. Then, the container 60 is inserted into the casing 66, whereupon the flange 61 provided at the container 60 is brought into contact with and secured to an opening edge (i.e., front edge) of the casing 66.

In the disposal apparatus 1 assembled in this way, the door 62 of the front face is openable and closable using the handle 63, so that the recovery box is readily taken in and out of the container 60 by opening the door 62.

Then, operations of the disposal apparatus 1 of the present embodiment will be described, making reference to Figs. 1, 7, 8, and 9. Operations for erasing magnetic data are first to be described.

First, the power switch SW is turned on and the field generating switch 54a is pushed in, so as to set to a magnetic field generating mode. Then, the door 62 is opened so that the recovery box 95 containing data recording media 2 is housed in the container 60. After closure of the door 62, the operating switch 55 is pushed.

Upon actuation of the operating switch 55, the controlling circuit 52 controls the charging contact 25, the excitation contact 24, and the contacts 27a and 27b of the polarity reverser 27 of the field generator 20 in reference to a closing state of the field generating switch 54a of the mode setting section 54. In the magnetic field generating mode, the heater current-carrying contact 36 and the anodal current-carrying contact 37 of the wave generator 30 remain open.

The controlling circuit 52 switches both the contacts 27a and 27b of the polarity reverser 27 to one side, so as to close the charging contact 25 for a predetermined period of time. Thereby, as described above, the capacitor 22 is charged until its charging voltage reaches the peak value of full-wave rectified voltage by the bridge diode 21. After a predetermined period of time from closure of the charging contact 25, the controlling circuit 52 opens the charging contact 25 followed by closure of the excitation contact 24. Thereupon, an electrical charge stored in the capacitor 22 is discharged via the coil 23, to which the above-mentioned attenuating alternating current "i" shown in Fig. 8 is applied to generate an attenuating alternating magnetic field.

As shown in Fig. 9, the coil 23 is wound around the container 60 made of a non-magnetic material (copper plate), the outside of the container 60 being covered with the outer casing 66 made of a magnetic material (iron plate), the front face of the container 60 being covered with the door 62 made of a magnetic material (iron plate). Consequently, the attenuating alternating magnetic field generated in the coil 23 is induced into the inner cavity of the container 60 without being weakened by the container 60 and magnetic field lines leaking out of the container 60 are shielded by the casing 66, the flange 61, and the door 62.

Thereby, the attenuating alternating magnetic field is applied to the container 60. Therefore, the magnetic recording media 2c to 2f contained in the recovery box 95 are exposed to the attenuating alternating magnetic field so that magnetic data recorded therein is erased.

After a predetermined period of time from closure of the excitation contact 24, the controlling circuit 52 opens the excitation contact 24 to complete a series of processes for erasing magnetic data in the magnetic recording media.

The disposal apparatus 1 of the present embodiment achieves erasure of magnetic data in the magnetic recording media housed in a recovery box 95 in a short time. Further, magnetic field lines leaking out are minimized, avoiding undesired effects associated with leaking magnetic field lines.

The controlling circuit 52 makes reverse connection of the contacts 27a and 27b provided at the polarity reverser 27 of the field generator 20 every time of operations for the magnetic field generating mode. Specifically, discharge polarity from the capacitor 22 to the coil 23 is reversed every time of operations for the magnetic field generating mode.

Consequently, even when a magnetic field is induced in the casing 66, which is made of a magnetic material, by a magnetic field generated in the coil 23, resulting in generation of mechanical repulsive or attractive force between the coil 23 and the casing 66, the reverse connection by the polarity reverser 27 reverses the mechanical force in each operation. That prevents displacement of the coil 23 relative to the container 60.

Operations for destroying optical data recorded on optical recording media are next to be described below.

First, the power switch SW is turned on and the wave generating switch 54b of the mode setting section 54 is pushed in so as to set to an electromagnetic wave generating mode. Then, the operating switch 55 is pushed.

Upon actuation of the operating switch 55, the controlling circuit 52 controls the heater current-carrying contact 36 and the anodal current-carrying contact 37 of the wave generator 30 in reference to a closing state of the wave generating switch 54b of the mode setting section 54. In the electromagnetic wave generating mode, the charging contact 25 and the excitation contact 24 of the field generator 20 remain open.

The controlling circuit 52 closes the heater current-carrying contact 36 to heat the cathode (heater) 31 a of the magnetron 31. That allows the cathode 31a to be ready to emit thermal electrons. After a predetermined period of time from closure of the heater current-carrying contact 36, the controlling circuit 52 closes the anodal current-carrying contact 37. Thereby, an anode voltage is applied to the anode 31b from the voltage doubler rectifier circuit 38, so as to radiate a microwave of substantially 4.3 GHz from the antenna 31c into the container 60.

Since the container 60 is made of a non-magnetic material (copper plate), the microwave of substantially 4.3 GHz radiated thereinto reflects on the inner surface of the container 60, without leaking out. Further, the front face of the container 60 covered with the door 62 made of a magnetic material (iron plate) prevents the microwave radiated into the container 60 from leaking out. Still further, even in the unlikely event that the electromagnetic wave leaks out of the container 60, the wave absorbing members 67 attached to the inner surface of the outer casing 66 and the rear face of the flange 61 absorb the electromagnetic wave, thereby preventing the electromagnetic wave from leaking out of the casing 66.

The electromagnetic wave radiated into the container 60 is applied to the optical recording media (DVD 2a, CD 2b) contained in the recovery box 95, so as to deform by heat a vapor-deposited aluminum film or pits formed in the media, achieving destruction of optical data in a short time. As described above, the electromagnetic wave leaking out of the container 60 is absorbed by the electromagnetic wave absorbing members 67, so that the electromagnetic wave leaking out of the disposal apparatus 1 is minimized.

After a predetermined period of time from closure of the anodal current-carrying contact 37, the controlling circuit 52 opens the anodal current-carrying contact 37 and the heater current-carrying contact 36 to complete a series of processes for destroying data in the optical recording media.

The disposal apparatus 1 of the present embodiment achieves destruction of optical data in optical recording media 2a, 2b contained in the recovery box 95 in a short time. Further, an electromagnetic wave leaking out is minimized, avoiding danger to the human body.

Operations for erasing magnetic data recorded in an optical magnetic disk 2f are next to be described.

First, the power switch SW is turned on and the magnetic field and electromagnetic wave generating switch (field-and-wave generating switch) 54c of the mode setting section 54 is pushed in, so as to set to a magnetic field and electromagnetic wave generating mode. Then, the operating switch 55 is pushed.

Upon actuation of the operating switch 55, the controlling circuit 52 controls the charging contact 25 and the excitation contact 24 of the field generator 20 and also controls the heater current-carrying contact 36 and the anodal current-carrying contact 37 of the wave generator 30 in reference to a closing state of the field-and-wave generating switch 54c of the mode setting section 54.

Specifically, setting to the magnetic field and electromagnetic wave generating mode by the mode setting section 54 simultaneously executes the magnetic field generating mode and the electromagnetic wave generating mode by means of the controlling circuit 52, with the effect that the attenuating alternating magnetic filed is applied, and simultaneously the microwave having a frequency of substantially 4.3 GHz is radiated, into the container 60.

Thereby, the optical magnetic disk 2f contained in the recovery box 95 in the container 60 is heated by the radiated microwave and degaussed by the applied attenuating alternating magnetic field in a short time, so that recorded magnetic data is erased. Also in the magnetic field and electromagnetic wave generating mode, as described above, magnetic field lines and an electromagnetic wave are prevented from leaking out of the disposal apparatus 1, so that safety is ensured.

The disposal apparatus 1 of the present embodiment achieves erasure of magnetic data recorded in the optical magnetic disk 2f contained in the recovery box 95 in a short time. Further, the electromagnetic wave leaking out is minimized, avoiding danger to the human body.

The description above illustrates the disposal apparatus 1, but the present invention is not limited to the above-mentioned embodiment, and may employ an additional configuration for safety and for operation.

For example, the above-mentioned embodiment only closes the door 62 with the hook 64 of the door 62 engaged with the engaging hole 65 of the flange 61. However, it is also possible to have a configuration provided with a detection switch at the engaging hole 65 so that the controlling circuit 52 forces to halt generation of a magnetic field and an electromagnetic wave while the door 62 is open. This configuration prevents a magnetic field or an electromagnetic wave from leaking out even if the door 62 is opened by mistake while a data recording means is undergoing operation, achieving enhanced safety.

Further, for example, it is also possible to improve the usability by a configuration in which indication by a pilot lamp is performed while either a magnetic field or an electromagnetic wave is outputted after actuation of the operating switch 55.

Next, an embodiment of a metal-separating device 7 for separating metal part of the optical recording media 2a, 2b will be hereinafter described.

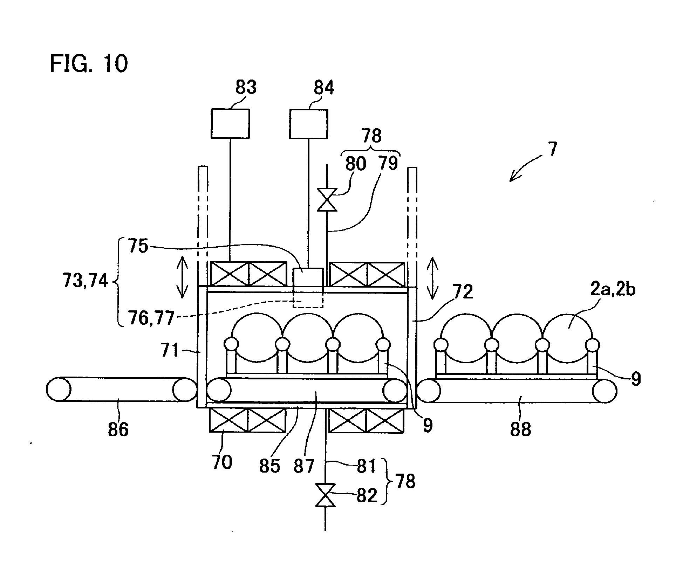

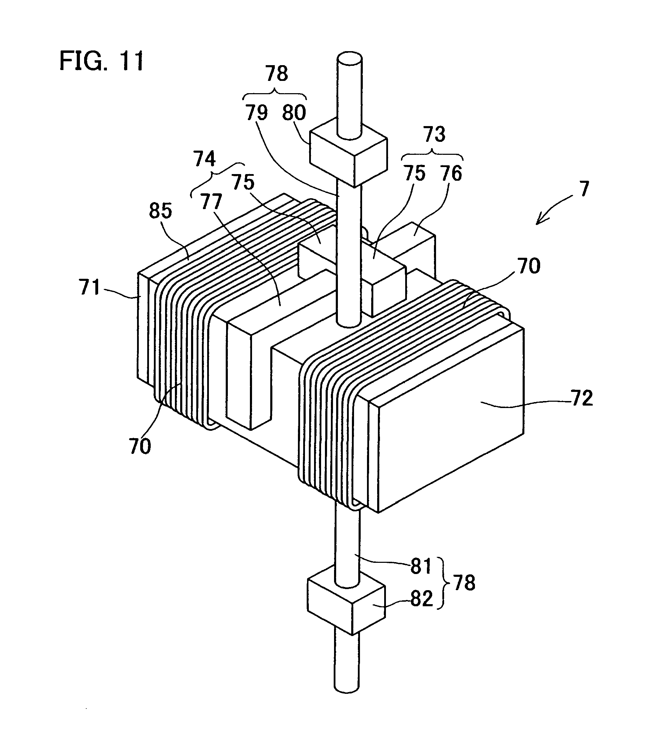

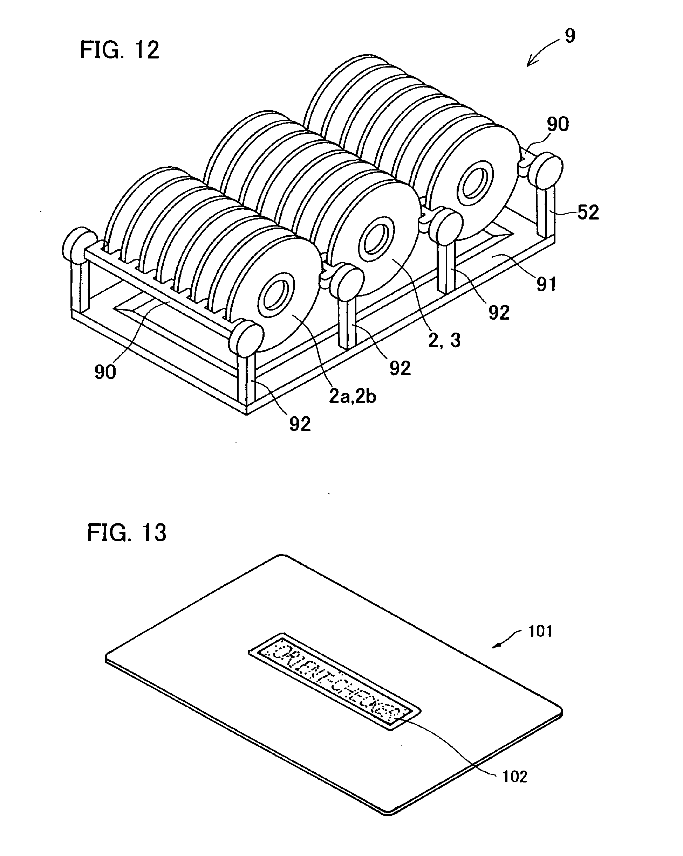

Fig. 10 is a schematic diagram of the metal-separating device 7, Fig. 11 is a perspective view showing an essential part of the metal-separating device 7 in Fig. 10, and Fig. 12 is a perspective view of a disk retainer for retaining optical data recording media.

The metal-separating device 7 in the present embodiment consists mainly of an operation chamber 85 for accommodating optical recording media, a first microwave radiator 73 and a second microwave radiator 74 both for radiating a microwave to the optical recording media in the operation chamber 85, a lean-oxygen maintaining unit 78 for maintaining an inner space of the operation chamber 85 at an atmosphere of low oxygen density, and a magnetic field generator 70 consisting mainly of a coil wound around the whole chamber 85.

The operation chamber 85 is made of stainless steel (a nonmagnetic metal), which prevents a microwave radiated thereinto from leaking out and which passes an electromagnetic field from the field generator 70 wound around the chamber 85 so that the field reaches the recording media 2a, 2b (i.e., objects to be disposed of).

The operation chamber 85 is of a cylindrical shape so that optical recording media 2a, 2b retained by a disk retainer 9 may pass through the chamber 85 in back-and-forth direction (right and left direction in the figure). Front and back doors 71, 72, both made of stainless steel, are mounted to both open ends of the chamber 85 so as to close the chamber 85.

The doors 71, 72 close the chamber 85 while a microwave is radiated toward the recording media 2a, 2b, so as to maintain the inner space of the chamber 85 at an atmosphere of low oxygen density as well as to prevent the microwave from leaking.

The first and second microwave radiators 73, 74 share a microwave generator 75 using a magnetron as well as a branching filter (not shown) for branching a microwave generated by the generator 75. The radiators 73, 74 have waveguides 76, 77, respectively, for guiding branched microwaves to centers of right and left walls of the chamber 85. Lengths of the tubes 76, 77 are designed to be different so that the microwaves having reached the optical recording media 2a, 2b have different phases.

The microwave generator 75 has a microwave intensity controller 84 for controlling intensity of generated microwave. The microwave intensity controller 84 changes voltage applied to the microwave generator 75 so as to change the intensity of the generated microwave and that of a microwave radiated to the optical recording media.

The lean-oxygen maintaining unit 78 consists mainly of a gas pipe 81, another gas pipe 79, and gas valves 82, 80. The gas pipe 81 is used in introducing carbon dioxide gas into the chamber 85 from a gas cylinder (not shown) storing carbon dioxide gas, the gas pipe 79 is used in discharging air from the chamber 85, and gas valves 82, 80 are connected to the gas pipes 81, 79, respectively, for closing and opening the pipes so as to control flow of gas or air.

The present embodiment employs carbon dioxide gas, which is heavier than air. Therefore, carbon dioxide gas is introduced into the chamber 85 through the pipe 81 connected to a lower part of the chamber 85, whereas air in the chamber 85 is discharged therefrom through the pipe 79 connected to an upper part of the chamber 85.

The magnetic field generator 70 consists mainly of a coil wound a number of times around the entire chamber 85 in a direction crossing to conveyance direction of the optical recording media.

The magnetic field generator 70 has a field intensity controller 83 for controlling intensity of a generated magnetic field. The field intensity controller 83 changes a voltage applied to the coil (i.e., field generator 70) so as to change intensity of the generated field. A capacitor (not shown) is connected to both ends of the coil and in series with the coil so as to absorb surge on supplying electricity to the coil.

As shown in Fig. 12, the disk retainer 9 consists mainly of four holders 90 each having serrated grooves formed thereon, a receiving tray 91, and supporters 92 for supporting the holders 90 above the tray 91. The receiving tray 91 is arranged below the holder 90 for receiving metal melt and flown out from the optical recording media 2a, 2b. The holders 90 are supported parallel to an upper face of the tray 91 by the supporters 92.

The holders 90 are arranged so that a distance from a bottom of any of the grooves to that of an opposing groove is shorter than a diameter of an optical recording medium 2a or 2b to be disposed of, so as to prevent the recording medium from dropping when the recording medium is inserted into grooves of adjoining holders 90, 90.

The grooves are formed substantially vertical and each has a width slightly wider than a thickness of the recording medium 2a or 2b.

The holders 90, the tray 91, and the supporters 92 are each made of ceramics, which is not affected by a microwave.

The optical recording medium 2a or 2b is retained by the disk retainer 9 by only insertion of the recording medium 2a or 2b between opposing grooves of adjoining holders 90, 90. Tilt of the recording medium 2a or 2b is restricted by the grooves and drop of the medium 2a or 2b is prevented by the distance between the bottoms of the grooves. Thus the present embodiment holds each of the optical recording media 2a, 2b vertically (in an upright position), with its both surfaces substantially parallel to the vertical line by means of the retainer 9.

Though Fig. 12 illustrates the optical recording media 2a, 2b retained by the retainer 9, stacked in their thickness direction at equal intervals, the recording media 2a, 2b may be retained with the recording media not stacked in their thickness direction. In such a case, microwave is radiated to the recording media effectively, though the recording media to be mounted on the retainer 9 may decrease.

As shown in Fig. 10, the metal-separating device 7 of the present embodiment has a loader 86 consisting of a belt conveyor in front of the operation chamber 85, for conveying the optical recording media 2a, 2b retained by the retainer 9 into the operation chamber 85. The device 7 further has an unloader 88 consisting of a belt conveyor in back of the operation chamber 85, for conveying the optical recording media 2a, 2b retained by the retainer 9 out of the operation chamber 85. Further, a conveyor 87 is equipped within the operation chamber 85. The conveyor 87 is a belt conveyor adapted to receive the recording media 2a, 2b from the loader 86, to adjust and fix locations of the media 2a, 2b in the chamber 85, and to deliver the media 2a, 2b to the unloader 88.

Then method of using the metal-separating device 7 of the present embodiment will be described hereinafter.

Optical recording media 2a, 2b are set, each in the upright position, in the disk retainer 9 at a predetermined interval and the retainer 9, retaining the media 2a, 2b, is put on the loader 86.

The loader 86 is driven so as to convey the media 2a, 2b, together with the retainer 9, into the chamber 85, whose front is open as the front door 71 has moved upward.

The conveyor 87, receiving the media 2a, 2b from the loader 86, is driven so as to locate the media 2a, 2b at predetermined positions in the chamber 85. Then the front and the back doors 71, 72 are closed to set the chamber 85 in a closed state.

Both the gas valves 80, 82 are opened to introduce carbon dioxide gas into the operation chamber 85 and to discharge air contained in the chamber by a pressure of the introduced gas (i.e., so-called "purge operation" is carried out). The gas valves 80, 82 are closed if the oxygen concentration in the chamber 85 has become below or equal to a predetermined level. A lean-oxygen state is maintained in the chamber 85.

Then electric power is supplied to the microwave generator 75. A microwave generated in the generator 75 is branched via the branching filter into two microwaves, which are radiated into the chamber 85 through the waveguides 76, 77. In this state, the two microwaves radiated into the chamber 85 have mutually different phases.

Simultaneously, the electric power is supplied to the magnetic field generator 70 so as to generate a magnetic field in the operation chamber 85.

Intensities of the microwave and the electromagnetic field are controlled sequentially or stepwise by the intensity controllers 84, 83, respectively. Controls of these intensities are carried out by modifying voltages applied to the microwave generator 75 and the magnetic field generator sequentially or stepwise. A sequential or stepwise modification in voltage makes a substantially sequential modification of a portion radiated in a concentrated fashion by the microwave, so that the microwave acts substantially uniformly on all the optical recording media 2a, 2b in the operation chamber 85.

The term "sequential or stepwise modification in voltage" includes a state in which no power is supplied.

Radiation of the microwave onto the optical recording media may cause a spark, but ignition is prevented and deterioration of plastics is reduced both by maintenance of the inner space of the operation chamber at low oxygen level.

The microwave generator in the subject embodiment has a maximum output of 5kw and an outputting frequency of 2.45 GHz. For disposing of the optical recording media 2a, 2b, a microwave is radiated for five minutes with its output being varied within 0 to 5kw in saw-tooth fashion. Difference of lengths of the two waveguides 76, 77 is substantially 60 mm.

The maximum output of the microwave is preferably 0.1kw or more for melting metal portions of the optical recording media 2a, 2b so as to separate the metal portions from plastic substrates. If the maximum output is below 0.1kw, there is a high possibility that the microwave fails to melt the metal portions. On the other hand, an upper limit is not required in the maximum output. However, the microwave generator may be too bulky if the maximum output exceeds 5kw. Also in the case, time duration of microwave radiation should be regulated strictly because a part of the metal portions might be heated in a quite short time to an extremely high temperature that might cause deterioration of a plastic portion. However, the foregoing description does not prohibit employment of a generator having a maximum output exceeding 5kw.

Then, on completion of the operation on the optical recording media 2a, 2b, radiation of the microwave and generation of the magnetic field are terminated. The law oxygen state is maintained for a while, so as to avoid deterioration of the plastic portions due to sudden exposure to air of the media 2a, 2b in elevated temperature as well as to avoid emission of vaporized metal into air.

After a predetermined time duration, the back door 72 of the operation chamber 85 is shifted upward to open the chamber 85. The conveyor 87 and the unloader 88 are operated together to convey the optical recording media 2a, 2b (after the operation) out of the chamber 85.

Plastic portions of the media 2a, 2b remaining in the retainer 9 and metal that has flown into the tray 91 are to be recycled.

Though an embodiment of the metal-separating device 7 is heretofore described, configuration of each portion is not limited to the embodiment.

For example, though in the embodiment the optical recording media 2a, 2b are held by the retainer 9 at a substantially upright position, the recording media 2a, 2b may be held at a position having a predetermined angle (not parallel) to the horizontal plane.

The microwave radiators 73, 74 may be one that radiates a microwave not branched. In this case, a microwave generator 75 such as a magnetron may be positioned directly in the operation chamber 85 without a waveguide.

The magnetic field generator 70 may be composed of a plurality of electromagnets such as solenoid coils arranged so that their end faces are exposed to the inner space of the chamber 85. In this case, the electromagnets are controlled discretely so that a desired elaborate magnetic field is generated and so that a portion where a microwave or a magnetic field is concentrated is changed at will.

The lean-oxygen maintaining unit 78 may use an inert gas such as nitrogen gas instead of carbon dioxide gas and may maintain the inner space of the operation chamber 85 at low oxygen concentration by introducing the inert gas continuously into the chamber 85 with the chamber 85 open. Alternatively, the inner space of the chamber 85 may be evacuated to a vacuum state or a substantially vacuum state.

The microwave intensity controller 84 and the field intensity controller 83 may control electric current supplied to the microwave generator 75 and field generator 70, respectively. They may be controlled automatically by a computer.

The above-described exemplary metal-separating device for the optical recording media is of an in-line type having a loader 86, an unloader 88, and a conveyor 87. However, the device may be of a batch type like a microwave oven in house, i.e., having an operation chamber 85 with a single door, whereby optical recording media 2a, 2b held by the disk retainer 9 are manually set in the chamber 85 and subjected to an operation after closure of the door and then the recording media 2a, 2b are brought out after opening of the door.

In the above-described embodiment the conveyor 87 is not driven while the optical recording media 2a, 2b are under erasing operation. However, the conveyor 87 may be driven while the media are under the operation, so that the media are mechanically moved during the operation, because in some case, for example, in relation to a form of the operation chamber 85, the media should be moved mechanically so as to be treated to a higher grade.

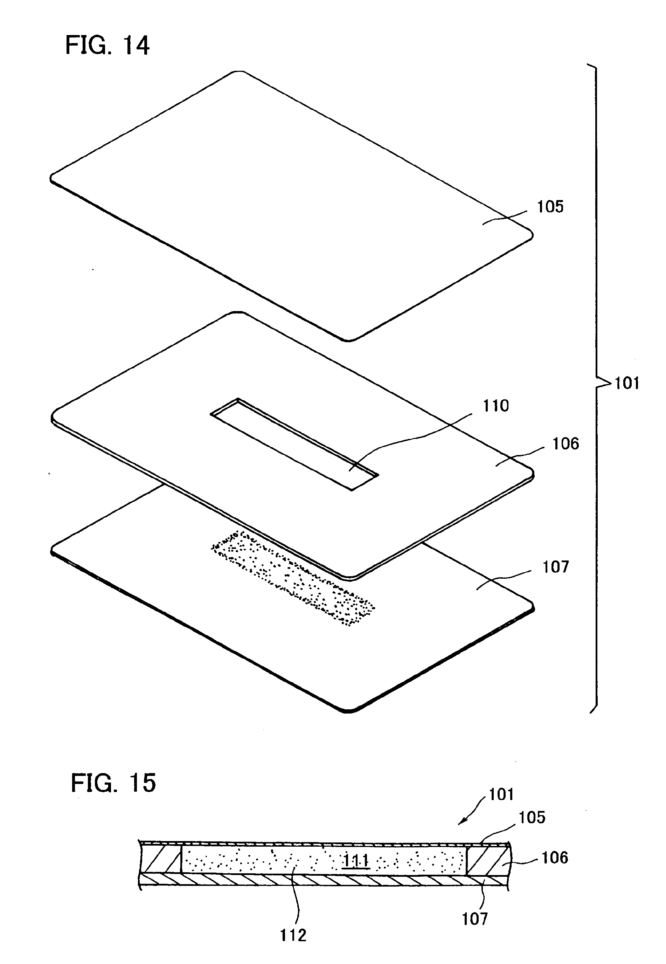

An indicator for confirming data erasure is hereinafter described in reference to Figs. 13 to 15. Fig. 13 is a perspective view of an indicator for confirming data erasure embodying the present invention. Fig. 14 is an exploded perspective view showing a stratified structure of the indicator shown in Fig. 13. Fig. 15 is a sectional view of a vicinity of the displaying portion of the indicator shown in Fig. 13. In the illustrated example, the indicator 101 has a shape of a card with a displaying portion 102 in the center of one surface thereof. The indicator 101 can show a desired display on the displaying portion 102 by means of a card writer (not shown) having a magnetic head. The indicator is to be positioned in the vicinity of the recovery box. For example, a recovery box with the indicator put thereon is set into the magnetic-data erasing device. In another embodiment, a holder for accommodating the indicator is in advance formed on the surface of the recovery box and the indicator is inserted into the holder before the erasing operation. In still another embodiment, the indicator is in advance attached integrally to the surface of the recovery box by means of, for example, sticking with paste.

The indicator 101 consists mainly of a transparent film layer 105, a core layer 106, and a magnetic body layer 107 adhesively bonded together by means of bonding layers (not illustrated). The transparent film layer 105 is made of a transparent plastic film such as a transparent PET (polyethylene terephthalate) film. The core layer 106 is a plate-like support body for ensuring rigidity and may be made of a material selected from various plastics, metals, and cardboards. As shown in Fig. 13, the plate-like body forming the core layer 106 has a rectangular opening 110 at its center.

The magnetic body layer 107 consists of a base film having a magnetic layer (not illustrated) on one surface or either of two surfaces thereof. A cavity 111 is formed at a portion corresponding to the opening 110 of the core layer 106. In the cavity 111, a relatively small amount of magnetic particles 112 are enclosed, being capable of moving freely in the cavity 111.

A front side of the cavity 111 is covered with the transparent film layer 105, through which behavior of the magnetic particles 112 in the cavity 111 can be observed with human eyes.

By positioning the magnetic head (not illustrated) in the vicinity of a portion of the magnetic body layer 107 that corresponds to the reverse side of the displaying portion 102 of the indicator 101 and moving the magnetic head relative to the indicator 101, a particular part of the magnetic body layer 107 is magnetized so that the magnetized part presents desired letter(s) or graphic pattern(s). Consequently, a number of micromagnets corresponding to the pattern are formed in the magnetic body layer 107. Thus the micromagnets generate leakage flux, along which the magnetic particles 112 in the cavity 111 are aligned. Behavior of the magnetic particles 112 aligned along the pattern, which is magnetized, is observable from outside through the transparent film layer 105.

Display on the displaying portion 102 disappears if and when the magnetism in the magnetic body layer 107 disappears. The magnetism in the layer 107 disappears so as to change the display on the portion 102 if and when the layer 107 is exposed to a more intense magnetic field than that at the time of magnetization of the layer 107 to form micromagnets by the magnetic head. This nature is used in infering whether an operation to render data recorded in data recording media unreadable is sufficiently carried out. If the display on the displaying portion 102 has disappeared after the operation for erasing magnetic data, it is inferred that the operation to render data recorded in the data recording media unreadable is sufficiently carried out.

## Claims

1. A method for disposing of a data recording means including at least one medium selected from an optical recording medium and a magnetic recording medium, comprising the steps of:
putting the data recording means into a box;
sealing the box;
delivering the sealed box to an operation site; and
rendering data recorded in the data recording means unreadable at the operation site by means of a data-readout-forbidding apparatus with the box sealed.

2. The method according to claim 1,
the data recording means comprising an optical recording medium,
the data-readout-forbidding apparatus comprising an optical-data destroying device,
the data recorded in the data recording means being rendered unreadable by destruction of the data recorded in the optical recording medium.

3. The method according to claim 1,
the data recording means comprising a magnetic recording medium,
the data-readout-forbidding apparatus comprising a magnetic-data erasing device,
the data recorded in the data recording means being rendered unreadable by erasure of data recorded in the magnetic recording medium.

4. A method for disposing of a data recording means comprising both an optical recording medium and a magnetic recording medium, comprising the steps of:
putting the data recording means into a box;
sealing the box;
delivering the sealed box to an operation site;
destroying data recorded in the optical recording medium at the operation site by means of an optical-data destroying device with the box sealed; and
erasing data recorded in the magnetic recording medium by means of a magnetic-data erasing device simultaneously with the step of destroying data recorded in the optical recording medium.

5. The method according to claim 4,
wherein the optical-data destroying device and the magnetic-data erasing device are combined to form an integrated apparatus for disposing of the data recording means.

6. The method according to one of claims 3 to 5,
wherein the step of erasing magnetic data is performed with an indicator positioned in the vicinity of the box, the indicator having a displaying portion that changes its displaying status on exposure to a magnetic field having an intensity equal to or exceeding a predetermined intensity.

7. The method according to one of claims 1 to 6,
wherein the step of sealing the box is performed by attaching a seal-determining sheet onto the box for determining breakage of the seal.

8. The method according to one of claims 1 to 6,
wherein the step of sealing the box is performed by locking up the box.

9. The method according to one of claims 1 to 6,
wherein the step of sealing the box is performed by locking up the box and by attaching a seal-determining sheet onto the box for determining breakage of the seal.

10. The method according to one of claims 1 to 9,
further comprising the below-listed steps after rendering the data unreadable:
opening the sealed box;
separating the data recording means into fragments according to materials;
sorting the fragments according to materials; and
producing recycled raw materials by exerting an operation consisting of at least one of crushing, fusion and dissolution on at least part of the sorted fragments.

11. The method according to one of claims 2, 4 and 5,
wherein the step of separating the data recording means involves a step of separating an optical recording medium, and
wherein the step of separating the optical recording medium includes heating a metal part of the optical recording medium by a metal-separating device adapted to radiate a microwave so as to separate the metal part from a plastic part.

12. The method according to claim 11,
wherein the metal-separating device is adapted to radiate a microwave with a maximum output of 0.1 kW or more.

13. The method according to claim 11 or 12,
wherein the metal-separating device is adapted to radiate a microwave with a maximum output of 5 kW or less.

14. The method according to one of claims 10 to 13,
wherein the step of separating the data recording means involves a step of separating an optical recording medium, and
wherein the step of separating the optical recording medium comprises scraping off a metal part of the optical recording medium by means of a scraper.

15. A method for disposing of a data recording means, the means comprising a data recording paper containing thereon information to be disposed of, comprising the steps of:
putting the data recording paper into a box;
sealing the box;
delivering the sealed box to an operation site; and
dissolving at the operation site the box together with the data recording paper contained therein, with the box sealed.

16. The method according to claim 15,
further comprising a step of refining the dissolved data recording paper and the dissolved box so as to form a recycled material.

17. The method according to claim 15 or 16,
wherein the step of sealing the box is performed by attaching a seal-determining sheet onto the box.

18. The method according to claim 15 or 16,
wherein the step of sealing the box is performed by merely closing the box.

19. The method according to one of claims 1 to 18,
further comprising steps of :
putting the sealed box into a lockable carrying case and locking up the carrying case;
delivering (1) the carrying case containing the sealed box and (2) a key for releasing lock of the carrying case separately to an operation site; and
taking out the sealed box by releasing the lock of the carrying case by means of the key.

20. The method according to one of claims 1 to 19,
further comprising a step of issuing a certificate showing completion of disposal of the data recording means from the operation site to a source of delivery.

21. The method according to one of claims 1 to 20,
wherein the steps of putting the data recording means into the box and sealing the box are performed by a client who asked disposal of the data recording means, and
wherein the step of delivering the sealed box to the operation site is performed by (1) the client, (2) one who is asked for the disposal by the client, or (3) one who is asked for the delivery by either of the former ones.
